(19) Europäisches Patentamt
European Patent Office
Office européen des brevets

(11) **EP 4 117 200 B1**

(12) **EUROPEAN PATENT SPECIFICATION**

(45) Date of publication and mention
of the grant of the patent:
**06.08.2025 Bulletin 2025/32**

(21) Application number: **21183729.9**

(22) Date of filing: **05.07.2021**

(51) International Patent Classification (IPC):
**H04B 10/079** (2013.01)  **H04L 43/067** (2022.01)

(52) Cooperative Patent Classification (CPC):
**H04B 10/0793; H04L 43/067**

(54) **COORDINATION OF MONITORING TASKS AMONG OPTICAL-NETWORK DEVICES**

KOORDINIERUNG VON ÜBERWACHUNGSAUFGABEN ZWISCHEN OPTISCHEN NETZWERKVORRICHTUNGEN

COORDINATION DE TÂCHES DE SURVEILLANCE ENTRE DES DISPOSITIFS DE RÉSEAU OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.01.2023 Bulletin 2023/02**

(73) Proprietor: **Nokia Solutions and Networks Oy**
**02610 Espoo (FI)**

(72) Inventors:
• **GIFRE RENOM, Lluis**
**08025 Barcelona (ES)**
• **BOITIER, Fabien**
**Paris 75006 (FR)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 3 291 493  US-A1- 2019 281 373**

• JI YUEFENG ET AL: "Artificial intelligence-driven autonomous optical networks: 3S architecture and key technologies", SCIENCE CHINA INFORMATION SCIENCES, SCIENCE CHINA PRESS, BEIJING, vol. 63, no. 6, 13 May 2020 (2020-05-13), XP037142437, ISSN: 1674-733X, [retrieved on 20200513], DOI: 10.1007/ S11432-020-2871-2
• PAOLUCCI FRANCESCO ET AL: "Network Telemetry Streaming Services in SDN-Based Disaggregated Optical Networks", JOURNAL OF LIGHTWAVE TECHNOLOGY, IEEE, USA, vol. 36, no. 15, 1 August 2018 (2018-08-01), pages 3142 - 3149, XP011685518, ISSN: 0733-8724, [retrieved on 20180614], DOI: 10.1109/JLT.2018.2795345

**Description**

BACKGROUND

Field

Various example embodiments relate to optical communication equipment and, more specifically but not exclusively, to monitoring equipment for an optical communication network.

Description of the Related Art

This section introduces aspects that may help facilitate a better understanding of the disclosure. Accordingly, the statements of this section are to be read in this light and are not to be understood as admissions about what is in the prior art or what is not in the prior art.

Optical network operators are facing a fast growth in bandwidth demand, in part due to the development and deployment of cloud-based services. As a result, various optical-network elements need to be configured and operated, e.g., to provide nearly optimal performance, meet quality-of-service requirements, and/or guarantee any other pertinent benchmarks. Due to this need, one of the requirements to telecom equipment manufacturers is to provide the optical network operator(s) with a supervisory system that can be used to monitor the status of various network elements, detect and mitigate undesired conditions, maintain good performance characteristics throughout the network, accelerate and/or improve automation of certain network functions, etc. It is also desirable for the supervisory system to be amenable to a relatively low-cost implementation.

EP 3 291 493 A1 discloses a configuration with installing on a node of a computer network, an agent of a network system, wherein the installed agent receives a network task via the network.

US 2019/281373 A1 discloses a telemetry manager receives, from a network server, global data collection information about network components in an optical network device.

SUMMARY OF SOME SPECIFIC EMBODIMENTS

The invention is set out in the appended set of claims. Disclosed herein are various embodiments of a supervisory system for an optical communication network configured to support shared access to measurement sensors of multiple optical-network nodes. According to an example embodiment, two or more optical-network nodes can negotiate a shared measurement schedule to synchronize triggering events for the measurements performed at different ones of the nodes and configure at least one of the nodes to receive measurement results from the other nodes. One possible benefit of such shared access is an improved accuracy of the measurements involving two or more sensors located at different nodes due to the synchronicity imposed by the shared measurement schedule. Another possible benefit of such shared access is the ability to use the same flow of digital measurement samples generated by a sensor for two or more different monitoring tasks hosted by different optical-network nodes.

According to an example embodiment, provided is an apparatus, comprising: a first optical-network node; a second optical-network node; and an optical fiber link connected, at least, to support transmission of an optical data stream between the first and second optical-network nodes, the first optical-network node including a first sensor to make first measurements of a portion of said optical data stream at the first optical-network node, the second optical-network node including a second sensor to make second measurements of the portion of said optical data stream at the second optical-network node; and wherein the first and second optical-network nodes are configured to perform a negotiation of monitoring to set one or more common measurement times for the first and second measurements.

In some embodiments of the above apparatus, the second optical-network node is configured to transmit, to the first optical-network node, information indicative of the second measurements performed thereat at said one or more common measurement times.

According to another example embodiment, provided is an apparatus, comprising a first optical-network node including an electronic controller and a node equipment, the node equipment being configured to communicate an optical data stream with a second optical-network node via an optical fiber link; wherein the electronic controller is configured to establish a shared measurement schedule for first measurements of a portion of the optical data stream at the node equipment and for second measurements of the portion of the optical data stream at the second optical-network node. The apparatus is configured to establish the shared measurement schedule using control messages exchanged by the first and second optical-network nodes.

In some embodiments of the above apparatus, the first optical network node is configured to receive information indicative of the second measurements from the second optical-network node.

According to yet another example embodiment, provided is a non-transitory machine-readable medium, having encoded thereon program code, wherein, when the program code is executed by a machine, the machine implements a method comprising the steps of: establishing a shared measurement schedule for performing first measurements at a first optical-network node of an optical communication network and performing second measurements at a different second optical-network node of the optical communication network; and causing digital samples of both the first measurements and the second measurements to be congregated (e.g., at least copies thereof are gathered together). In various embodiments, a network entity at which digital samples of both the first measurements and the second measurements may be congregated can be selected, e.g., from the following nonexclusive list: the first optical-network node, the second optical-network node, a different third optical-network node, and a controller.

According to yet another example embodiment, provided is an apparatus, comprising: at least one processor; and at least one memory including program code; and wherein the at least one memory and the program code are configured to, with the at least one processor, cause the apparatus at least to: establish a shared measurement schedule for first measurements at a first optical-network node of an optical communication network and for second measurements at a different second optical-network node of the optical communication network, the shared measurement schedule being established using control messages exchanged by the first and second optical-network nodes; and cause digital samples of both the first measurements and the second measurements to be gathered together at least at one of the first and second optical-network nodes. In other embodiments, the digital samples of both the first measurements and the second measurements may alternatively and/or additionally be congregated at a different third optical-network node and/or a controller.

BRIEF DESCRIPTION OF THE DRAWINGS

Other aspects, features, and benefits of various disclosed embodiments will become more fully apparent, by way of example, from the following detailed description and the accompanying drawings, in which:

FIG. 1 shows a block diagram of an optical communication network in which various disclosed embodiments can be practiced;

FIG. 2 shows a block diagram of an optical-network node that can be used in the optical communication network of FIG. 1 according to an embodiment;

FIG. 3 shows a block diagram of a portion of the optical communication network of FIG. 1 according to an embodiment;

FIG. 4 shows a flowchart of a measurement method that can be implemented in the network portion of FIG. 3 according to an embodiment; and

FIG. 5 shows a flowchart of a measurement method that can be implemented in the network portion of FIG. 3 according to another embodiment.

DETAILED DESCRIPTION

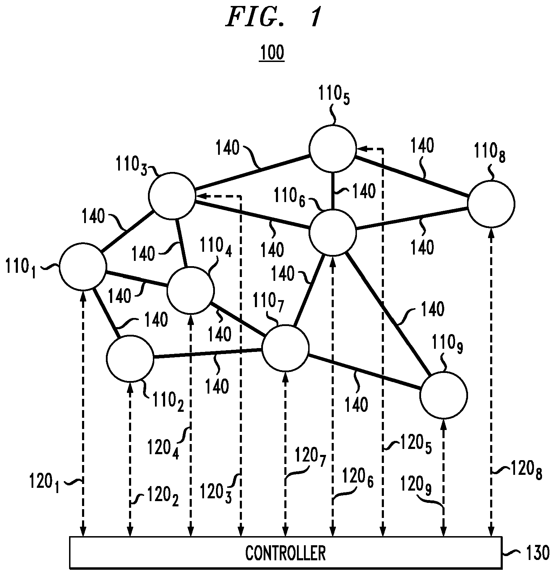

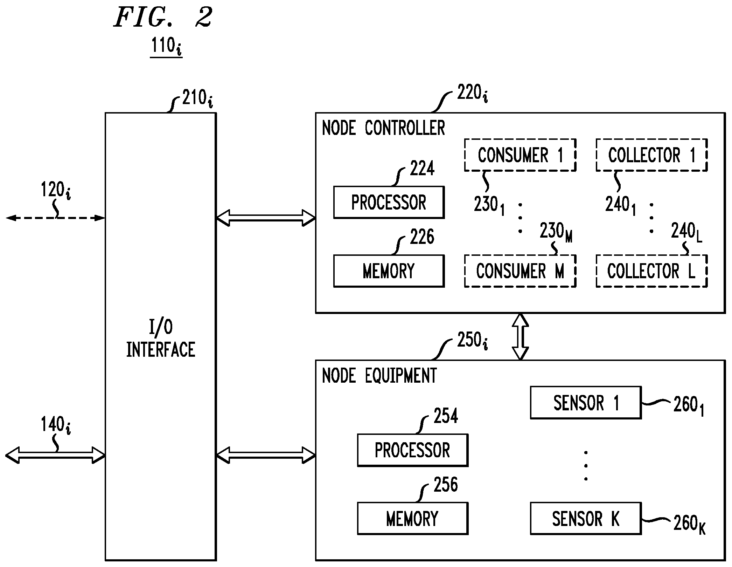

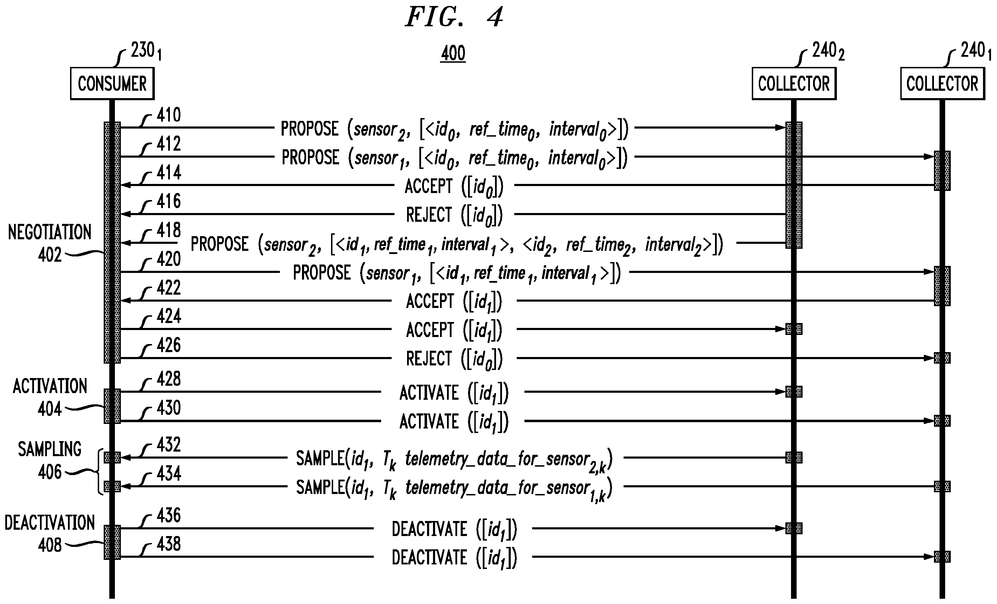

FIG. 1 shows a block diagram of an optical communication network **100** in which various disclosed embodiments can be practiced. Optical communication network **100** is illustratively shown as comprising nine optical-network nodes **110$_1$-110$_9$** and a network controller **130**. In operation, the nodes **110$_1$-110$_9$** can send and receive optical data packets, via inter-node links **140,** from a corresponding source node to a corresponding destination node. Each node **110$_i$** is connected to network controller **130** via a corresponding control link **120$_i$**, where i=1, 2, ..., 9. Controller **130** may use control links **120** to appropriately configure the nodes **110** for generating and/or directing optical data packets, via inter-node links **140,** from a corresponding ingress node **110$_i$** to a corresponding egress node **110$_j$**, where j=1, 2, ..., 9 and j≠i. In an example embodiment, each of nodes **110$_1$-110$_9$** can operate as an ingress node, as a relay node, and/or as an egress node. Each control link **120$_i$** can be a wireline link, a wireless link, an optical link, or any combination thereof. Each inter-node link **140** can be implemented using a suitable optical fiber or fiber-optic cable. In some embodiments, an inter-node link **140** may also enable the resident control entities (e.g., **220,** FIG. 2) of individual nodes **110** connected by that link to exchange control messages directly, i.e., without involving network controller **130**. Several examples of such exchanges are described in more detail below in reference to FIGs. 4-5. Depending on the embodiment, such exchanges can be performed using an Optical Supervisory Channel (OSC) (or similar) or a dedicated control/management subnet, e.g. implemented using Ethernet connections.

As shown in FIG. 1, network **100** has a partial mesh topology, in which each of the nodes **110$_1$-110$_9$** is directly connected to only some of the other nodes. However, various embodiments disclosed herein are not limited only to partial mesh topologies. For example, at least some embodiments can be adapted for a network having a full mesh topology, in which each of the nodes **110$_1$-110$_9$** is directly connected to each of the other nodes. In various alternative embodiments, network **100** can have more or fewer than nine constituent nodes **110** connected to one another using the corresponding full mesh topology or any desired partial mesh topology.

In some embodiments, network **100** is configured to use Wavelength Division Multiplexing (WDM), i.e., multiple carrier wavelengths.

When functioning as an ingress node, a node **110** may operate to: (i) receive data from an external source via a corresponding peripheral link (not explicitly shown in FIG. 1); (ii) (re)packetize the received data; (iii) modulate an optical carrier using the packetized data; and (iv) apply the resulting modulated optical signal to appropriate one or more of the corresponding links **140**. When functioning as an egress node, a node **110** may operate to: (i) receive a modulated optical signal from a corresponding link **140;** (ii) extract the payload data therefrom; and (iii) direct the extracted data to an external data sink via a corresponding peripheral link (not explicitly shown in FIG. 1). When functioning as a relay node, a node **110** may operate to receive an optical data packet via one link **140** and then send the corresponding optical data packet through one or more other links **140**.

In an example embodiment, the nodes **110$_1$-110$_9$** are time-synchronized with one another with suitable accuracy. For example, the Precision Time Protocol (PTP), which is capable of achieving relative clock accuracies in the sub-microsecond range, can be used for time-synchronization purposes in some embodiments of network **100**. A person of ordinary skill in the pertinent art will readily understand that other suitable time-synchronization mechanisms may also be used in alternative embodiments of network **100**.

In an example embodiment, a node **110** may include some or all of the following node equipment: one or more lasers; one or more multiplexers/demultiplexers, e.g., a Reconfigurable Optical Add/Drop Multiplexer (ROADM); one or more optical and/or electronic switches; one or more optical splitters, combiners, mixers, and couplers; one or more optical amplifiers; one or more photodetectors; one or more sensors; monitoring and diagnostic equipment; one or more analog-to-digital converters; one or more digital-to-analog converters; one or more fiber-optic interfaces; one or more optical transmitters/receivers; signal-processing circuitry; control circuitry, etc. Several examples of the node equipment that may be used in a node **110** are described in more detail below in reference to FIGs. 2-3.

In some embodiments, network **100** may be configured to use machine-learning techniques, such as reinforcement learning (RL). Herein, the term "reinforcement learning" (or RL) generally refers to an area of machine learning concerned with how software and/or hardware control agents (e.g., various electronic controllers) ought to take actions in an environment to optimize (e.g., maximize) some benefit (e.g., cumulative reward). RL is one of three basic machine-learning paradigms, which also include supervised learning and unsupervised learning. In an example implementation, the environment for RL may be formulated in the form of a Markov decision process (MDP), e.g., because many RL algorithms so formulated may utilize dynamic programming techniques. One noticeable difference between classical dynamic programming methods and RL algorithms is that the latter do not assume knowledge of an exact mathematical model of the MDP and tend to be applied to relatively large MDPs for which more-exact methods may not be technically feasible. RL, due to its generality, is used in many disciplines, such as game theory, control theory, operations research, information theory, simulation-based optimization, multi-agent systems, swarm intelligence, statistics, and genetic algorithms. In some literature, RL may also be referred to as approximate dynamic programming or neuro-dynamic programming. Example benefits of RL in network **100** may include improvements in network automation, quality of user experience, reaction time, etc.

To be efficient, machine-learning techniques typically rely on relatively large volumes of high-quality, heterogeneous monitoring information, e.g., parameter samples, device states, state alerts, etc. Such information can typically be used during both the exploration phase and the exploitation phase of an RL algorithm, such as the SARSA algorithm. Herein, SARSA stands for state-action-reward-state-action. The RL algorithm can be run by an agent, e.g., an electronic controller, that can interact with the environment, e.g., represented by controllable circuits and devices. The agent can observe different states in the environment using the monitoring information and take actions. In response to an action, the observed state may change, and the agent may get a reward, e.g., quantified by a Q-value. For example, in the SARSA algorithm, the main function for updating the Q-value depends on the current state $S_1$, the action $A_1$ the agent chooses in the state $S_1$, the reward the agent gets for choosing the action $A_1$, the state $S_2$ that is observed after the action $A_1$ is taken, and the next action $A_2$ the agent chooses in the state $S_2$. The agent may be programmed to maximize the reward using a suitable action-selection policy, such as the greedy policy or the $\varepsilon$-greedy policy. High-quality monitoring information enables the RL algorithm to: (i) better identify anomalies and undesired conditions during the exploration phase; and (ii) make better decisions and/or take finer actions during the exploitation phase, thereby significantly improving the overall system performance.

Disadvantageously, some conventional performance-monitoring systems in optical communication networks may not be capable of providing the high-quality monitoring information needed for properly supporting some of the above-indicated machine-learning techniques. For example, some problems in the state of the art may include, but are not limited to: (i) false positives in the detection of undesired conditions; (ii) poor quality of collected monitoring samples, e.g., including low accuracy, high granularity, long inter-sample delays, and unacceptable jitter; (iii) scalability issues, e.g., due to the bandwidth and processing power required for adequately handling the monitoring information at a centralized controller; and (iv) relatively high latency, e.g., associated with the involvement of a centralized controller in certain actions directed at reconfiguring some network devices in response to the monitoring information.

At least some of the above-indicated problems in the state of the art can beneficially be addressed using at least some embodiments disclosed herein. More specifically, an example embodiment can beneficially be used to enable two or more optical-network nodes (e.g., 110, FIG. 1) to agree on a shared measurement schedule for collecting monitoring information and then have shared access to at least some parts of the collected monitoring information. One possible benefit of such shared access is an improved accuracy of the measurements involving two or more measurement sensors located at different nodes due to the synchronicity imposed by the shared measurement schedule. The resulting higher-quality monitoring information can be used, e.g., to support RL-based system-control techniques as outlined above. At least some embodiments may also be used to improve performance of optical networks that do not rely on machine learning for adaptive reconfiguration of some or all network devices therein.

FIG. 2 shows a block diagram of an optical-network node $110_i$ according to an embodiment. The corresponding control link $120_i$ and a set $140_i$ of inter-node links $140$ are also shown in FIG. 2 to better illustrate the relationship between the apparatus shown in FIGs. 1 and 2. The set $140_i$ includes $N_i$ inter-node links $140$, where $N_i$ is the degree of the i-th optical-network node $110_i$. $N_i$ is a positive integer that may depend on the particular location of the node $110_i$ within the network $100$ and on the network topology. In the example of FIG. 1, for the optical-network node $110_6$ (i.e., for i=6), the number $N_6$ is $N_6$=5; and for the optical-network node $110_9$ (i.e., for i=9), the number $N_9$ is $N_9$=2, and so on. In the shown embodiment, each inter-node link $140$ of the set $140_i$ may be configured to support a corresponding OSC channel, which can be used by the corresponding pair of nodes $110$ to exchange control messages, e.g., as described below.

Node $110_i$ comprises an input/output (I/O) interface $210_i$, a node controller $220_i$, and node equipment $250_i$. In operation, I/O interface $210_i$ appropriately couples node controller $220_i$ to control link $120_i$, which enables the node controller to communicate with network controller $130$. I/O interface $210_i$ also appropriately couples node controller $220_i$ and node equipment $250_i$ to the set $140_i$ of inter-node links $140$, which enables the node equipment to transmit and receive optical data packets to/from other nodes $110_j$ and also enables the node controller to send and receive control messages via the corresponding OSC channel(s). In alternative embodiments, the control and management plane network or other suitable channels can be used to transmit such control messages.

Node controller $220_i$ comprises a processor $224$, a memory $226$, and other appropriate control circuitry (not explicitly shown in FIG. 2). In an example embodiment, processor $224$ and memory $226$ can be configured to create and run at least two types of virtual control agents: consumer agents $230_1$-$230_M$ and collector agents $240_1$-$240_L$. The numbers M and L are positive integers that can be dynamically changed as needed, i.e., node controller $220_i$ may dynamically create and annihilate consumer agents $230$ and/or collector agents $240$ on the as-needed basis.

Node equipment $250_i$ comprises a signal processor $254$, a memory $256$, sensors $260_1$-$260_K$, and other appropriate circuits and devices (not explicitly shown in FIG. 2), e.g., some of the circuits and devices mentioned above. In an example embodiment, processor $254$ and memory $256$ may be configured to perform signal processing and possibly some other computations needed to support conventional data processing, routing, and transport functions of node $110_i$. Sensors $260_1$-$260_K$ may include physical sensors, such as an optical power meter or an Optical Channel Monitor (OCM), and/or logical sensors, such as a Bit-Error-Ratio (BER) monitor of a Forward-Error-Correction (FEC) decoder and the like. Physical sensors may be specific physical circuits and/or devices within the node equipment $250_i$. Logical sensors may be implemented, e.g., using software running on processor $254$ with access to memory $256$. Both physical and logical sensors $260$ can be configured to produce measurements in a digital form, e.g., compatible with the format used by the corresponding consumer agent(s) $230$ and collector agent(s) $240$.

In an example embodiment, node $110_i$ is configured to negotiate shared measurement schedules for one or more monitoring tasks with one or more other nodes $110_j$, where j≠i. To start a negotiation aimed at collecting specified measurements from one or more sensors $260$ of other node(s) $110_j$ and optionally from one or more sensors $260$ of the host node $110_i$, node controller $220_i$ of the node $110_i$ first operates to create a consumer agent $230_m$ corresponding to the aim. Consumer agent $230_m$ then operates to request cooperation from (i) the other node(s) $110_j$ implicated by the aim and (ii) possibly from appropriate control entities within the host node $110_i$. In response to the request, node controller(s) $220$ of such other node(s) $110_j$ operate to create the corresponding collector agent(s) $240$, each tasked with collecting the specified measurements from the corresponding sensor(s) $260$ of the corresponding host node $110_j$. The created collector agent(s) $240$ then operate to: (i) negotiate with the consumer agent $230_m$ an agreement for the coordinated measurements; (ii) collect from the corresponding sensor(s) $260$ the measurements performed in accordance with the negotiated agreement; and (iii) send the measurement results to the consumer agent $230_m$. If the aim implicates the host node $110_i$, then the node controller $220$ of the host node $110_i$ similarly operates to create the corresponding collector agent(s) $240$ thereat.

In an example embodiment, an agreement between the consumer agent $230_m$ and a collector agent $240$ may rely on at least the following parameters: (i) an identifier of the agreement; (ii) a set of sensor-selection criteria to determine the sensor(s) $260$ to be controlled by the collector agent $240$; and (iii) a list of measurement schedules. Each measurement schedule may be defined by at least the following parameters: (i) an identifier of the schedule; (ii) a reference time; and (iii) a time interval. Within the same agreement, different schedules are preferably given different respective (i.e., unique) identifiers. The reference time relies on the synchronized (e.g., PTP-based) clocks of the nodes $110_i$ and $110_j$ and can be, e.g., in the form of a timestamp having appropriate (e.g., sub-millisecond or sub-microsecond) accuracy. When periodic measurements are needed, the "time interval" parameter is used to specify the time period with which the periodic measurements are collected. When a single measurement is needed, the "time interval" parameter can be set to zero. In some cases, an agreement may have a single schedule.

In some alternative embodiments, one or more additional parameters may be included in the agreement and/or schedules. For example, one or more processing parameters may be added to the agreement to configure the corresponding collector agent **240** to process the collected measurement samples prior to being sent to the corresponding consumer agent **230$_m$**. Such processing parameters may, for example, specify some filtering criteria to be applied to the collected measurement samples, sample-aggregation policies to be applied to the collected measurement samples, mathematical transforms to be applied to the collected measurement samples, etc. As another example, one or more values of sensor-configuration parameters may be specified when reconfigurable (e.g., multipurpose) sensors are being invoked by the agreement.

In some embodiments, the sensor-selection criteria of an agreement may depend on the specific architecture of the node equipments **250** of the various optical-network nodes **110$_j$** and, as such, may be vendor specific. In some other embodiments, the sensor-selection criteria of an agreement may be formulated in a vendor-agnostic manner, e.g., using a set of predefined monitoring contexts and a list of sub-tasks needed for the monitoring task to be performed. For example, for the task of monitoring, in real-time, the optical attenuation on an optical link **140** between a ROADM **250** of node **110$_i$** and a ROADM **250** of node **110$_j$**, the monitoring context can be defined as the "optical link" corresponding to the local line port in question. Using such monitoring context, a target sensor may be defined as the enumeration of the sub-tasks of measuring the "local output port power," "local input port power," "neighbor output port power," and "neighbor input port power." Then, the sensor-selection criteria for the agreement can be formulated as a tuple containing the monitoring context and the list of sub-tasks so formulated. Under this approach, node **110$_i$** does not need to "know" the internal architecture of node **110$_i$** to select sensors **260** therein suitable for the monitoring task for which the agreement is being negotiated, thereby detaching the agreement from vendor-specific implementations. It is worth mentioning here that different monitoring contexts may result in different enumerations of the sub-tasks for the target sensors.

In an example embodiment, an agreement negotiation between the consumer agent **230$_m$** and a corresponding collector agent **240** may be implemented using, at least, control messages of the following types:

(1) Propose. A "propose" message may be sent when one or more measurement-schedule proposals for an agreement need to be exchanged by the participants. An example content of such "propose" message can be presented in the form of the following string: (sensor-selection-criteria, [<id$_1$, ref_time$_1$, interval$_1$>, ..., <id$_N$, ref_time$_N$, interval$_N$>]), where each of the sub-strings <id$_n$, ref_time$_n$, interval$_n$> represents the n-th proposed measurement schedule characterized by the above-explained parameters: schedule identifier (denoted as "id$_n$"); reference time (denoted as "ref_time,"); and time interval (denoted as "interval,"), where n= 1, ..., N. At the very minimum, the "propose" message contains at least one proposed measurement schedule, i.e., N=1. The proposed measurement schedule(s) may be accepted or rejected using the Accept/Reject messages.

(2) Accept/Reject. An "accept" message is sent to specify which of the measurement schedule(s) is (are) accepted and can be presented in the form of the following string: (accept, [id$_1$, ..., id$_N$]), where "id$_n$" is the schedule identifier of the accepted n-th measurement schedule. A "reject" message is sent to specify which of the measurement schedule(s) is (are) rejected and can be presented in the form of the following string: (reject, [id$_1$, ..., id$_N$]), where "id$_n$" is the schedule identifier of the rejected n-th measurement schedule. The measurement schedules not referenced in the Accept/Reject messages are typically unaffected. Rejecting a measurement schedule that has been previously activated causes the rejected measurement schedule to be deactivated.

(3) Retrieve. A "retrieve" message in the form (retrieve, sensor-selection-criteria) can be used by a consumer agent **230$_m$** to obtain the measurement schedules of other agreements, which the corresponding collector agent **240** may have for the specified sensor-selection criteria. Such "retrieve" message typically triggers a corresponding "propose" message sent by the collector agent **240** to the requesting consumer agent **230$_m$**, wherein the sub-strings of measurement schedules provide a list of the measurement schedules already in place at the collector agent for the implicated sensors.

(4) Activate/Deactivate. An "activate" message is sent by the consumer agent **230$_m$** to the corresponding collector agents **240** to activate the telemetry flow(s) corresponding to the previously accepted measurement schedule(s). An "activate" message can be presented in the form of the following string: (activate, [id$_1$, ..., id$_N$]), where "id$_n$" is the schedule identifier of the corresponding n-th measurement schedule. A "deactivate" message is sent by the consumer agent **230$_m$** to the corresponding collector agents **240** to deactivate the previously activated telemetry flow(s). A "deactivate" message can be presented in the form of the following string: (deactivate, [id$_1$, ..., id$_N$]), where "id$_n$" is the schedule identifier of the corresponding n-th measurement schedule. The telemetry flows corresponding to the measurement schedules not referenced in the activate/deactivate messages are typically unaffected. Note that an "activate" message in reference to a measurement schedule that has not been previously accepted may be ignored.

(5) Sample. A "sample" message is sent by collector agent **240** to the consumer agent **230$_m$** to provide thereto the measurement data collected by the collector agent from the corresponding sensor(s) **260** in accordance with the corresponding activated measurement schedule. A "sample" message can be presented in the form of the following string: (id$_n$, timestamp, measurement-data), where "id$_n$" is the schedule identifier of the corresponding measurement schedule; "timestamp" is the time of the measurement; and "measurement-data" is a measurement result. The structure of the field "measurement-data" may depend on the kind of data being sent. For example, for attenuation values, the field "measurement-data" may contain a single value representing the attenuation in dB. In contrast, for spectrally resolved measurements, the field "measurement-data" may comprise a sequence of pairs of values, each such pair providing a respective frequency value, e.g., in GHz, and the corresponding spectral sample in appropriate units. Note that, in some cases, the field "measurement-data" may contain processed measurements, e.g., when one or more processing parameters are specified to the corresponding collector agent as indicated above and explained in more detail below.

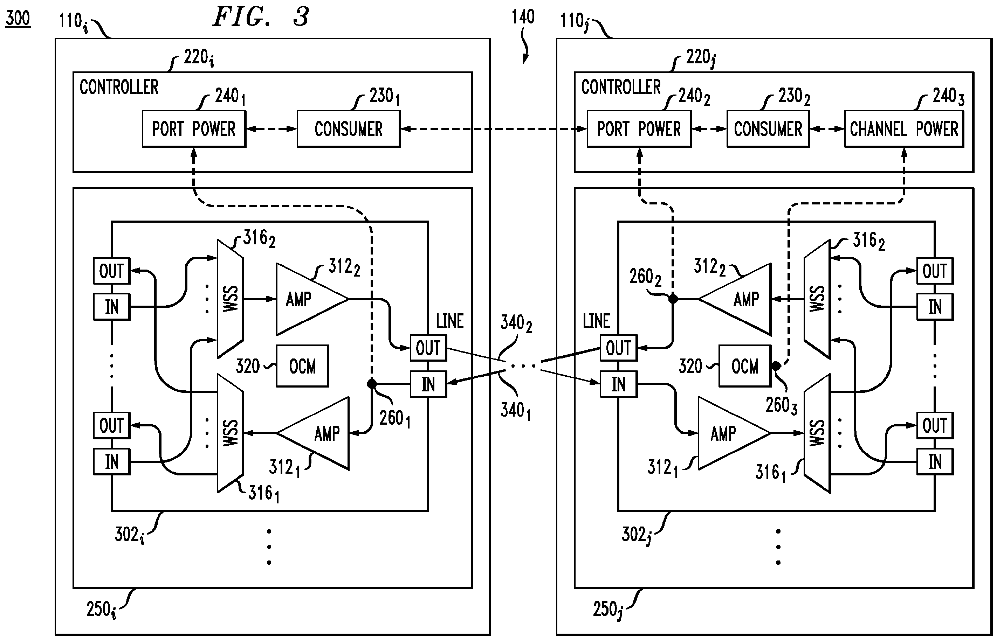

Two non-limiting examples of negotiations between consumer agent **230$_m$** and two collector agents **240** implemented using the above-listed control messages are described below in reference to FIGs. 3-5. In some embodiments, a negotiation may involve a consumer agent and three or more collector agents located at two or more different optical-network nodes **110**. In some other embodiments, a negotiation may involve at least one consumer agent and two or more collector agents. All of the agents may be at the same optical-network node or variously distributed over two or more different optical-network nodes. In some embodiments, a single node may have more than one controller **220**. In such embodiments, a negotiation may involve two different controllers **220** from the same node and/or controllers **220** from different nodes.

In different possible embodiments, different transport and/or application layer protocols can be used to transport the above-described control messages. For example, transport-layer protocols, such as the Transmission Control Protocol (TCP), User Datagram Protocol (UDP), and Quick UDP Internet Connections (QUIC) Protocol, each of which carries text-based or binary-field-based packets, can be used in some embodiments. In some other embodiments, application-layer protocols, such as the Google Remote Procedure Call (gRPC), Apache Thrift, http-based Representational State Transfer (REST) Application Programming Interface (API), and Advanced Message Queuing Protocol (AMQP)/Message Queuing Telemetry Transport (MQTT) protocol can alternatively be used. A person of ordinary skill in the pertinent art will readily understand that other suitable protocols corresponding to different layers may also be used in alternative embodiments.

FIG. 3 shows a block diagram of a portion **300** of optical communication network **100** (FIG. 1) according to an embodiment. Portion **300** comprises optical-network nodes **110$_i$** and **110$_j$** connected by way of the corresponding inter-node link **140** (also see FIG. 1). Each of optical-network nodes **110$_i$** and **110$_j$** has the general structure described above in reference to FIG. 2. Accordingly, optical-network node **110$_i$** comprises node controller **220$_i$** and node equipment **250$_i$**. Optical-network node **110$_j$** similarly comprises node controller **220$_j$** and node equipment **250$_j$**. For illustration purposes and without any implied limitations, this particular embodiment is described in reference to the use of the corresponding OSC channel(s). As already indicated above, the use of other communications means for transmitting control messages is also possible in other embodiments.

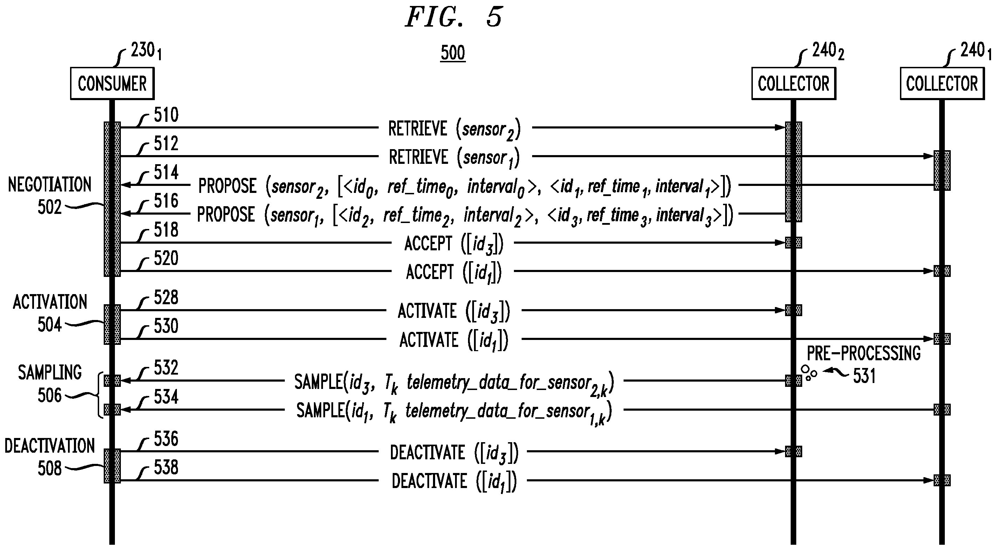

In accordance with this particular embodiment, the inter-node link **140** is configured to support a plurality of optical wavelength channels and at least one OSC channel. Said at least one OSC channel is configured to support communications between node controllers **220$_i$** and **220$_j$** in a manner that enables consumer agents **230** thereof and collector agents **240** thereof to exchange control messages, e.g., as described in reference to FIGs. 4 and 5.

Each of node equipments **250$_i$** and **250$_j$** comprises a respective ROADM, only a portion of which is explicitly shown in FIG. 3. As known in the pertinent art, a ROADM can be used to route optical signals in an optical communication network. A ROADM is configurable, which enables the network operator, e.g., using network controller **130,** to remotely specify which of the carrier wavelengths are to be added, dropped, and/or passed through at the optical-network node. Such ROADMs are often encountered, e.g., in regional, metro, and long-haul optical networks.

A ROADM is often described in reference to its number of "degrees." Each degree represents a respective switching direction that is typically associated with a line duplex fiber pair, such as the line optical fiber pair **340$_1$**, **340$_2$** shown in FIG. 3. For example, a degree-2 ROADM operates to switch optical signals in two directions, typically referred to as "East" and "West." A degree-4 ROADM operates to switch optical signals in four directions, typically referred to as "North," "South," "East," and "West," and so on. Depending on the particular location of the corresponding node within the network and on the network topology, the degree of the ROADM can vary, e.g., from one to twenty or more.

In a modular architecture, a degree-N ROADM can be implemented using N optical-line cards, e.g., as described in U.S. Patent No. 10,281,659. For illustration purposes, FIG. 3 shows only one such optical-line card for each one of the node equipments **250$_i$** and **250$_j$**. The shown optical-line card of node equipment **250$_i$** is labeled

$302_i$. The shown optical-line card of node equipment $250_j$ is labeled $302_j$. A person of ordinary skill in the art will understand that each of the node equipments $250_i$ and $250_j$ may include one or more additional optical-line cards 302 (not explicitly shown in FIG. 3) and other pertinent components, e.g., as described in U.S. Patent No. 10,281,659.

In an example embodiment, optical-line card $302_i$ of node equipment $250_i$ comprises optical amplifiers $312_1$ and $312_2$, wavelength-selective switches (WSSs) $316_1$ and $316_2$, and an OCM 320. Optical amplifier $312_1$ operates to amplify an optical WDM input signal received through optical fiber $340_1$. WSS $316_1$ then operates to appropriately wavelength de-multiplex the amplified optical WDM signal generated by the optical amplifier $312_1$ and apply the resulting de-multiplexed optical signals to the corresponding ones of the optical output ports of optical-line card $302_i$ as indicated in FIG. 3. WSS $316_2$ operates to wavelength multiplex the optical input signals received through the corresponding ones of the optical input ports of optical-line card $302_i$ as indicated in FIG. 3. Optical amplifier $312_2$ then operates to amplify the resulting optical WDM signal and apply the amplified optical WDM signal to optical fiber $340_2$.

In some embodiments, some or all of the optical ports of optical-line card $302_i$ may be bidirectional.

Optical-line card $302_j$ of node equipment $250_j$ has a similar structure to that of optical-line card $302_i$ of node equipment $250_i$ and is configured to operate in a similar manner.

Node controller $220_i$ of node $110_i$ is illustratively shown, without any implied limitations, as running one consumer agent, labeled $230_1$, and one collector agent, labeled $240_1$. Collector agent $240_1$ is configured to collect optical-power measurements from an optical-power sensor (e.g., photodetector), labeled $260_1$, which is optically coupled to monitor the optical power at the optical input port of the optical amplifier $312_1$ in optical-line card $302_i$.

Node controller $220_j$ of node $110_j$ is illustratively shown, without any implied limitations, as running one consumer agent, labeled $230_2$, and two collector agents, labeled $240_2$ and $240_3$, respectively. Collector agent $240_2$ is configured to collect optical-power measurements from an optical-power sensor, labeled $260_2$, which is connected to monitor the optical power at the optical output port of the optical amplifier $312_2$ in optical-line card $302_j$. Collector agent $240_3$ is configured to collect optical-power measurements from a wavelength-resolved output, labeled $260_3$, of the OCM 320 in optical-line card $302_j$.

FIG. 4 shows a flowchart of a measurement method 400 that can be implemented in network portion 300 according to an embodiment. Method 400 is illustratively shown and described as involving consumer agent $230_1$ and collector agents $240_1$ and $240_2$ (also see FIG. 3). The respective vertical lines that extend down from each of consumer agent $230_1$ and collector agents $240_1$ and $240_2$ in FIG. 4 represent increasing time. Semi-transparent boxes superimposed over the vertical time lines represent respective activities of the corresponding agents, e.g., each of the boxes represents a corresponding task being executed by the corresponding agent. As already mentioned above, the clocks of the corresponding optical-network nodes $110_i$ and $110_j$ are synchronized with one another. Each of the horizontal arrows that connect two respective time lines represents a respective control message transmitted between the corresponding agents. In this illustrative use case, consumer agent $230_1$ and collector agent $240_1$ reside in the same optical-network node, i.e., $110_i$, whereas collector agent $240_2$ resides in a different optical-network node, i.e., $110_j$. In other possible use cases, other relative locations of the participating agents are also possible.

As shown, method 400 comprises: (i) a negotiation phase 402; (ii) an activation phase 404; (iii) a sampling phase 406; and (iv) a deactivation phase 408. Negotiation phase 402 comprises transmission of control messages 410-426, using which the participating agents attempt to come to an agreement regarding the tasked measurements. Activation phase 404 comprises transmission of control messages 428-430, using which the participating agents activate the agreed-on telemetry flows. Sampling phase 406 comprises transmission of control messages 432-434, using which the telemetry data are transmitted. Depending on the agreed-on measurement schedule, sampling phase 406 may include more instances of "sample" messages carrying the corresponding pieces of telemetry data. Deactivation phase 408 comprises transmission of control messages 436-438, which stops or interrupts the flow of "sample" messages. Although, for illustration purposes, the phases 402-408 are shown in FIG. 4 as being separate and distinct in the time dimension, in some cases, some of the phases may overlap in time, and the corresponding control messages of different phases may be interleaved.

In this example use case, consumer agent $230_1$ is tasked with tracking the optical attenuation between optical-line cards $302_i$ and $302_j$ on optical link $340_1$ (see FIG. 3). An optical-attenuation value can be obtained, e.g., by taking a ratio of the optical powers measured by optical-power sensors $260_1$ and $260_2$ at substantially the same sampling time. Accordingly, consumer agent $230_1$ operates to send "propose" messages 410 and 412 to collector agents $240_2$ and $240_1$, which are connected to the optical-power sensors $260_2$ and $260_1$, respectively.

Each of the "propose" messages 410 and 412 carries respective sensor-selection criteria, which, in some embodiments, can be formulated in terms of the corresponding measurement sub-tasks, e.g., as explained previously. For example, the sensor-selection criteria $sensor_2$ carried by the "propose" message 410 may identify the sub-task of measuring the optical input power of optical link $340_1$. The sensor-selection criteria $sensor_1$ carried by the "propose" message 412 may similarly identify the sub-task of measuring the optical output power of optical link $340_1$. Each of the "propose" messages **410** and **412** also carries the proposed measurement schedule $\langle id_0, ref\_time_0, interval_0 \rangle$. A person of ordinary skill in the art will readily recognize that performing the indicated sub-tasks on the common schedule will enable consumer agent **230₁** to determine the optical attenuation between optical-line cards **302;** and **302ⱼ** on optical link **340₁**, as tasked.

In response to the "propose" message **412**, collector agent **240₁** sends an "accept" message **414**, as it determines that optical-power sensor **260₁** is available for the measurements on the proposed measurement schedule $id_0$. However, in response to the corresponding "propose" message **410**, collector agent **240₂** sends a "reject" message **416**. This rejection may be, e.g., due to a conflict with another, previously agreed-to schedule that collector agent **240₂** may have with consumer agent **230₂**. Collector agent **240₂** then follows up with a counterproposal, by sending a "propose" message **418,** wherein two alternative measurement schedules, $\langle id_1, ref\_time_1, interval_1 \rangle$ and $\langle id_2, ref\_time_2, interval_2 \rangle$, are proposed to consumer agent **230₁**. The newly proposed measurement schedules $id_1$ and $id_2$ can be the schedules for the use of optical-power sensor **260₂** that the collector agent **240₂** previously accepted in other agreements, but otherwise fit the sensor-selection criterion *sensor₁* of the "propose" message **410**. In other words, the collector agent **240₂** proposes possible sharing/reuse of a measurement schedule from a different agreement.

Upon receipt of the "propose" message **418,** consumer agent **230₁** attempts to find out if any of the proposed measurement schedules $id_1$ and $id_2$ is acceptable to collector agent **240₁** with respect to the use of the optical-power sensor **260₁**. For this purpose, consumer agent **230₁** first selects one of the measurement schedules $id_1$ and $id_2$, e.g., based on some auxiliary information or randomly. This particular illustrative example assumes that consumer agent **230₁** has selected the measurement schedule $id_1$. Consumer agent **230₁** then sends to collector agent **240₁** a "propose" messages **420,** which carries the sensor-selection criterion *sensor₁* and the selected schedule $id_1$. In response to the "propose" message **420**, collector agent **240₁** sends back an "accept" message **422,** as it determines that the optical-power sensor **260₁** is available for measurements on the proposed measurement schedule $id_1$. The "accept" message **422** clears consumer agent **230₁** to accept the measurement schedule $id_1$ with respect to the optical-power sensor **260₂**. As such, consumer agent **230₁** sends an "accept" message **424,** which informs collector agent **240₂** that the measurement schedule $id_1$ has been accepted. Consumer agent **230₁** then also sends a "reject" message **426,** which informs collector agent **240₁** that the previously accepted schedule $id_0$ has now been rejected.

Thus, using control messages **410-426,** consumer agent **230₁** and collector agents **240₁** and **240₂** have agreed on the measurement schedule $id_1$ for using the optical-power sensors **260₁** and **260₂** in the task of tracking the optical attenuation between optical-line cards **302;** and **302ⱼ** on optical link **340₁**. Accordingly, consumer agent **230₁** sends "activate" messages **428** and **430** to collector agents **240₂** and **240₁**, respectively, which activates the measurement schedule $id_1$ at both of those collector agents.

After the activation, the agents enter the sampling phase **406**. For simplification, only two "sample" messages **432, 434** are shown in FIG. 4. The "sample" message **432** is sent by collector agent **240₂** and contains the measurement schedule $id_1$, timestamp $T_k$, and the measurement datum produced using the optical-power sensor **260₂**, which is denoted as telemetry_data_for_sensor$_{2,k}$. The "sample" message **434** is similarly sent by collector agent **240₁** and contains the measurement schedule $id_1$, timestamp $T_k$, and the measurement datum produced using the optical-power sensor **260₁**, which is denoted as telemetry_data_for_sensor$_{1,k}$. Depending on the parameters of the measurement schedule $id_1$, additional pairs of such "sample" messages may be sent to consumer agent **230₁** by collector agents **240₁** and **240₂** to deliver additional telemetry data. For example, if the value of interval$_1$ (denoted here as $\tau$) specified for the measurement schedule $id_1$ is $\tau \neq 0$, then the timestamps $T_k$ of such serially transmitted "sample" messages may be in accordance with Eq. (1):

$$T_k = T_0 + k\tau \qquad (1)$$

where $T_0$ denotes the value of $ref\_time_1$ specified in the measurement schedule $id_1$; and $k$ is the (integer) time index. In other embodiments, other approaches may also be used to define the periodicity of a monitoring task. For example, the following instruction or similar may be used: every 10 seconds, collect 3 samples spaced by 1 ms.

"Deactivation" messages **436, 438** may be sent by consumer agent **230₁** to collector agents **240₁** and **240₂**, e.g., when the intended measurement task is completed and/or further telemetry data are not needed. The "deactivation" messages **436, 438** thus stop the flow of the "sample" messages (such as **432, 434**) for the measurement schedule $id_1$.

FIG. 5 shows a flowchart of a measurement method **500** that can be implemented in network portion **300** according to another embodiment. Method **500** makes use of the above-mentioned "retrieve" messages. The depiction of method **500** in FIG. 5 is similar to the depiction of method **400** in FIG. 4. For illustration purposes and without any implied limitations, method **500** is described in reference to the same task as method **400**, i.e., with consumer agent **230₁** being tasked with tracking the optical attenuation between optical-line cards **302ᵢ** and **302ⱼ** on optical link **340₁**.

Method **500** comprises: (i) a negotiation phase **502;** (ii) an activation phase **504;** (iii) a sampling phase **506;** and (iv) a deactivation phase **508**. Negotiation phase **502** comprises transmission of control messages **510-520,** using which the participating agents attempt to come to an agreement regarding the tasked measurements. Activation phase **504** comprises transmission of control messages **528-530,** using which the participating agents activate the agreed-on telemetry flows. Sampling phase **506** comprises transmission of control messages **532-534,** using which the telemetry data are transmitted. Depending on the agreed-on measurement schedule, sampling phase **506** may include more instances of "sample" messages carrying the corresponding pieces of telemetry data. Deactivation phase **508** comprises transmission of control messages **536-538,** which stops or interrupts the flow of "sample" messages.

In method **500,** consumer agent **230$_1$** is configured to implement (if possible) a shared use of measurement schedules previously accepted by collector agents **240$_1$** and **240$_2$**, e.g., with other consumer agents. Such shared use may be beneficial in some cases, e.g., due to the corresponding reductions in the negotiation time, memory consumption, and/or bandwidth consumption.

At the onset of negotiation phase **502,** consumer agent **230$_1$** operates to send "retrieve" messages **510** and **512** to collector agents **240$_2$** and **240$_1$**, respectively. Each of the "retrieve" messages **510** and **512** carries respective sensor-selection criteria. For example, the "retrieve" message **510** carries the sensor-selection criterion $sensor_2$. The "retrieve" message **512** similarly carries the sensor-selection criterion $sensor_1$. The sensor selection criteria $sensor_1$ and $sensor_1$ for the attenuation-tracking task have been described previously in reference to FIG. 4.

In response to the "retrieve" message **512,** collector agent **240$_1$** sends a "propose" message **514,** which carries measurement schedules <$id_0$, $ref\_time_0$, $interval_0$> and <$id_1$, $ref\_time_0$, $interval_1$>. The measurement schedules $id_0$ and $id_1$ can be the schedules for the use of optical-power sensor **260$_1$** that the collector agent **240$_1$** previously accepted in other agreements corresponding to the sensor-selection criterion $sensor_1$.

In response to the "retrieve" message **510,** collector agent **240$_2$** similarly sends a "propose" message **516,** which carries measurement schedules <$id_2$, $ref\_time_2$, $interval_2$> and <$id_3$, $ref\_time_3$, $interval_3$>. The measurement schedules $id_2$ and $id_3$ can be the schedules for the use of optical-power sensor **260$_2$** that the collector agent **240$_2$** previously accepted in other agreements corresponding to the sensor-selection criterion $sensor_2$.

Upon receiving the "propose" messages **514** and **516,** consumer agent **230$_1$** operates to: (a) compute intersection(s) between the measurement schedules $id_0$, $id_1$ and the measurement schedules $id_2$, $id_3$; and (b) determine whether or not any of the computed intersections satisfies the sampling needs of the attenuation-tracking task. If there is no intersection (i.e., the intersection is empty) after step (a) or if it is determined after step (b) that none of the computed intersections satisfies the sampling needs of the task, then collector agent **240$_2$** may attempt a different negotiation strategy, e.g., similar to that of negotiation phase **402** of method **400.** Otherwise, the processing of method **500** may proceed, e.g., as explained in more detail below.

A non-empty intersection of two measurement schedules may be observed, e.g., if one of the following example schedule-compatibility features is present:

(i) Full equality. Two schedules are deemed "fully equivalent" if the respective values of ref_time and interval are the same in both.
(ii) Same reference time, scalable interval. In this case, the respective values of ref_time are the same in two schedules, but the respective values of the interval are different, e.g., with one interval value being an integer multiple of the other.
(iii) Different reference times, same interval. In this case, the respective values of ref_time are different in two schedules, but the respective values of the interval are the same.

A person of ordinary skill in the art will readily understand that other schedule-compatibility features may also result in a non-empty intersection of the measurement schedules.

For the sake of this illustrative example, let us assume that the measurement schedules $id_1$ and $id_3$ are characterized by the schedule-compatibility feature (ii), wherein $interval_1$ is greater than $interval_3$ by an integer factor of B. In this case, consumer agent **230$_1$** may obtain usable measurement samples from collector agents **240$_1$** and **240$_2$**, e.g., by instructing the collector agent **240$_2$** to appropriately aggregate each B samples or filter out (B-1) of each B samples obtained from the optical-power sensor **260$_2$**. This pre-processing operation is labeled **531** in FIG. 5.

After analyzing the "propose" messages **514** and **516** as described above, consumer agent **230$_1$** may send "accept" messages **518** and **520.** The "accept" message **518** informs collector agent **240$_2$** that the measurement schedules $id_3$ is accepted. The "accept" message **518** may then be followed by an additional control message (not explicitly shown in FIG. 5) that instructs collector agent **240$_2$** to perform pre-processing **531** on the measurement samples obtained from the optical-power sensor **260$_2$**. The "accept" message **520** informs collector agent **240$_1$** that the measurement schedules $id_1$ is accepted. Thus, using control messages **510-520,** consumer agent **230$_1$** and collector agents **240$_1$** and **240$_2$** have agreed to use the previously accepted measurement schedules $id_1$, $id_3$ for a new task, e.g., different from the previous tasks corresponding to the measurement schedules $id_1$, $id_3$. In this particular case, based on the analysis of the previously accepted measurement schedules, additional processing **531** has also been implemented to make the measurement samples generated in accordance with the previously accepted measurement schedules compatible with the new task.

Upon completion of the negotiation phase 502, consumer agent $230_1$ sends "activate" messages 528 and 530 to collector agents $240_2$ and $240_1$, respectively, which activates the measurement schedules $id_1$, $id_3$ threat with respect to this consumer agent.

After the activation, the agents enter the sampling phase 506. For simplification, only two "sample" messages 532, 534 are shown in FIG. 5. The "sample" message 532 is sent by collector agent $240_2$ and contains the measurement schedule $id_3$, timestamp $T_k$, and the measurement datum produced by applying pre-processing 531 to the measurement samples generated by optical-power sensor $260_2$ in accordance with the measurement schedule $id_3$. The measurement datum of the "sample" message 532 is denoted as $telemetry\_data\_for\_sensor_{2,k}$. The "sample" message 534 is similarly sent by collector agent $240_1$ and contains the measurement schedule $id_1$, timestamp $T_k$, and the measurement datum produced by the optical-power sensor $260_1$ in accordance with the measurement schedule $id_1$. The measurement datum of the "sample" message 534 is denoted as $telemetry\_data\ for\_sensor_{1,k}$. Additional pairs of such "sample" messages may be sent to consumer agent $230_1$ by collector agents $240_1$ and $240_2$ to deliver additional telemetry data, e.g., corresponding to timestamps $T_k$ expressed by Eq. (1) or by a suitable alternative, as mentioned above.

"Deactivation" messages 536, 538 may be sent by consumer agent $230_1$ to collector agents $240_1$ and $240_2$, e.g., when the intended measurement task is completed and/or further telemetry data are not needed. The "deactivation" messages 536, 538 thus stop the flow of the "sample" messages (such as 532, 534) to consumer agent $230_1$. The "deactivation" messages 536, 538 do not typically affect the telemetry flows for the original measurement schedules $id_1$, $id_3$, which the collector agents $240_1$ and $240_2$ had in place with other consumer agents prior to the negotiation phase 502.

In some embodiments, one or more of the following additional features may be implemented:

(A)Auto-reject. The auto-reject feature relies on an expiration timer to automatically reject measurement-schedule proposals not explicitly accepted or rejected before the expiration timer runs out. For example, during a negotiation, the participating agents may typically float several measurement-schedule proposals. Such proposals may be stored in an agent's memory, thereby consuming the corresponding resources. The auto-reject feature may beneficially be used to free up some memory space by purging stale proposals. In an example embodiment, the auto-reject feature may be implemented, e.g., by adding an "auto_reject_timeout" field to the "propose" message to enable per-proposal timeouts or by defining a separate dedicated Set (auto_reject_timeout) message. In such embodiments, transmission of some "reject" messages, e.g., 416, FIG. 4, may not be needed.

(B)Pre-processing/Post-processing.   Additional fields may be added to the schedule tuple to configure the corresponding agent for some pre-processing or post-processing of the measurement samples. An example of such pre-processing is described above in reference to pre-processing 531, FIG. 5. In general, pre-processing or post-processing may include multiple operations, which can be implemented, e.g., by configuring a corresponding processing pipeline. For example, an additional field, processing_pipeline, can be included in the "propose" message to specify the processing to be carried out. In an example embodiment, the field processing_pipeline may contain a list of corresponding tuples, each of the tuples defining an operation to be performed and providing the set of parameters needed for properly executing the operation. As an example, spectrum retrieval from OCM 320 may include a filtering pipeline defined as follows: $<id_i$, $ref\_time_i$, $interval_i$, [<spectrum_filter, 193100, 193200>, <integrate, 12.5>, <convert, mW>]. This filtering pipeline specifies that, for the measurement schedule $id_i$, spectral samples ought to be:

(i) subjected to band-pass filtering to limit the samples to the frequency range between 193100 GHz and 193200 GHz; (ii) integrated in steps of 12.5 GHz resulting in (193200 -193100)/12.5 = 8 integrated values; and (iii) scaled to be in the units of mW. A person of ordinary skill in the art will understand that such processing pipelines can be beneficial, e.g., due to a more-optimal use of the pertinent network resources, such as processing power, memory, and/or bandwidth.

(C)Dynamic renegotiation of agreements. In some cases, while the telemetry flows of a sampling phase (e.g., 406, FIG. 4; 506, FIG. 5) are active, it may be desirable to modify the corresponding agreement(s). For example, an interval value(s) may need to be modified; a new sensor may need to be added to the agreement; a current sensor may need to be removed from the agreement, etc. The corresponding (new) negotiation may therefore be initiated, and the corresponding control messages may be interleaved with the "sample" messages of the current agreement. During such negotiation, the participating agents operate to honor and fulfill the current agreement. When the renegotiation is completed, the participating agents may start activating the substitute schedules and deactivating or rejecting the previous schedules, thereby implementing a non-disruptive agreement update.

(D)Ordered proposals. In some cases, collector agents may be configured to retrieve their schedules in an ordered manner, with the ordering being based on some preference or characteristic. For example, the measurement schedules characterized by a higher "share factor" (e.g., used in a greater number of agreements) are likely to be more useful than the less-frequently used ones. Therefore, presenting the higher "share factor" schedules for consideration first may produce a faster hit, thereby beneficially reducing the proposal-processing time and corresponding consumed resources. In general, the corresponding consumer agent ought to be aware of the ordering to take full advantage of the expedited-processing opportunity.

According to an example embodiment disclosed above, e.g., in the summary section and/or in reference to any one or any combination of some or all of FIGs. 1-5, provided is an apparatus, comprising: a first optical-network node (e.g., $110_i$, FIG. 3); a second optical-network node (e.g., $110_j$, FIG. 3); and an optical fiber link (e.g., **340,** FIG. 3) connected, at least, to support transmission of an optical data stream between the first and second optical-network nodes, the first optical-network node including a first sensor (e.g., $260_1$, FIG. 3) to make first measurements of a portion of said optical data stream at the first optical-network node, the second optical-network node including a second sensor (e.g., $260_2$, FIG. 3) to make second measurements of the portion of said optical data stream at the second optical-network node; and wherein the first and second optical-network nodes are configured to perform a negotiation of monitoring (e.g., **402,** FIG. 4; **502,** FIG. 5) to set one or more common measurement times for the first and second measurements.

In some embodiments of the above apparatus, the second optical-network node is configured to transmit, to the first optical-network node, information indicative of the second measurements performed thereat at said one or more common measurement times.

In some embodiments of any of the above apparatus, in response to the negotiation of monitoring, the second optical-network node is configured to include in the information (e.g., **432,** FIG. 4; **532,** FIG. 5) a respective one of the common measurement times for each one of the second measurements performed at said one or more common measurement times.

In some embodiments of any of the above apparatus, the second optical-network node is configured to generate the information using specified processing (e.g., **531,** FIG. 5) applied to an output of the second sensor, said processing being specified during the negotiation of monitoring.

In some embodiments of any of the above apparatus, the first optical-network node has (e.g., at **514,** FIG. 5) a first measurement schedule for the first sensor; wherein the second optical-network node has (e.g., at **516,** FIG. 5) a second measurement schedule for the second sensor; and wherein the first and second optical-network nodes are configured to set the one or more common measurement times using a non-empty intersection of the first and second measurement schedules.

In some embodiments of any of the above apparatus, the second optical-network node is configured to select the second sensor from a plurality of sensors (e.g., $260_1$-$260_K$, FIG. 2) of the second optical-network node based on one or more sensor-selection criteria communicated by the first optical-network node during the negotiation of monitoring.

In some embodiments of any of the above apparatus, the first sensor is a logical sensor configured to run on a processor (e.g., **254,** FIG. 2) of the first optical-network node, the processor of the first optical-network node being configured to recover data encoded in the portion of said optical data stream.

In some embodiments of any of the above apparatus, the second sensor is a logical sensor configured to run on a processor (e.g., **254,** FIG. 2) of the second optical-network node.

In some embodiments of any of the above apparatus, the negotiation of monitoring comprises transmission of a plurality of control messages (e.g., **410-426,** FIG. 4; **510-520,** FIG. 5) between the first and second optical-network nodes.

In some embodiments of any of the above apparatus, at least one of the control messages (e.g., **410, 412,** FIG. 4) is to specify a reference time for said one or more common measurement times.

In some embodiments of any of the above apparatus, at least one of the control messages (e.g., **410, 412,** FIG. 4) is to specify a period for the common measurement times.

In some embodiments of any of the above apparatus, at least one of the control messages (e.g., **410, 412,** FIG. 4) is to specify one or more sensor-selection criteria for the first or second measurements.

According to another example embodiment disclosed above, e.g., in the summary section and/or in reference to any one or any combination of some or all of FIGs. 1-5, provided is an apparatus, comprising: a first optical-network node (e.g., $110_i$, FIG. 2) including an electronic controller (e.g., **220,** FIG. 2) and a node equipment (e.g., **250,** FIG. 2), the node equipment being configured to communicate an optical data stream with a second optical-network node (e.g., $110_j$, FIG. 1) via an optical fiber link (e.g., **140,** FIG. 2); and wherein the electronic controller is configured to establish a shared measurement schedule (e.g., at **402,** FIG. 4; **502,** FIG. 5) for first measurements of a portion of the optical data stream at the node equipment and for second measurements of the portion of the optical data stream at the second optical-network node.

In some embodiments of the above apparatus, the first optical network node is configured to receive information indicative of the second measurements from the second optical-network node.

In some embodiments of any of the above apparatus, the shared measurement schedule is configured to cause at least one of the first measurements and at least one of the second measurements to be synchronous (e.g., substantially or exactly simultaneous).

In some embodiments of any of the above apparatus, the apparatus is configured to transmit at least some of the information on an optical supervisory channel.

According to yet another example embodiment disclosed above, e.g., in the summary section and/or in reference to any one or any combination of some or all of FIGs. 1-5, provided is a non-transitory machine-readable medium, having encoded thereon program code, wherein, when the program code is executed by a machine, the machine implements a method comprising the steps of: (i) establishing a shared measurement schedule (e.g., at **402,** FIG. 4; **502,** FIG. 5) for performing first measurements at a first optical-network node (e.g., **110$_i$**, FIG. 3) of an optical communication network and performing second measurements at a different second optical-network node (e.g., **110$_j$**, FIG. 3) of the optical communication network; and (ii) causing digital samples of both the first measurements and the second measurements to be congregated (e.g., at **406,** FIG. 4; **506,** FIG. 5). As used herein, the term "congregated" should be interpreted to mean that a particular (e.g., distinct) network entity has (e.g., gathered together thereat, accessible on demand thereto, within its control, or stored in a memory thereof) at least copies of the digital samples of both the first measurements and the second measurements. In various embodiments, such network entity may be selected, e.g., from the following nonexclusive list: the first optical-network node, the second optical-network node, a different third optical-network node, and an electronic controller.

According to yet another example embodiment disclosed above, e.g., in the summary section and/or in reference to any one or any combination of some or all of FIGs. 1-5, provided is an apparatus, comprising: at least one processor (e.g., **224,** FIG. 2); and at least one memory (e.g., **226,** FIG. 2) including program code; and wherein the at least one memory and the program code are configured to, with the at least one processor, cause the apparatus at least to: establish a shared measurement schedule (e.g., at **402,** FIG. 4; **502,** FIG. 5) for first measurements at a first optical-network node (e.g., **110$_i$**, FIG. 3) of an optical communication network and for second measurements at a different second optical-network node (e.g., **110$_j$**, FIG. 3) of the optical communication network; and cause digital samples of both the first measurements and the second measurements to be congregated (e.g., at **406,** FIG. 4; **506,** FIG. 5).

In some embodiments of the above apparatus, the shared measurement schedule is configured to cause at least one of the first measurements and at least one of the second measurements to be substantially or exactly synchronous.

In some embodiments of any of the above apparatus, the apparatus is configured to transmit some of the digital samples between the first and second optical-network nodes on an optical supervisory channel.

In some embodiments of any of the above apparatus, the at least one memory and the program code are configured to, with the at least one processor, cause said some of the digital samples to be generated using specified processing (e.g., **531,** FIG. 5) applied to an output of a corresponding measurement sensor (e.g., **260$_2$**, FIG. 3), the output being generated in accordance with the shared measurement schedule.

In some embodiments of any of the above apparatus, the at least one memory and the program code are configured to, with the at least one processor, specify the processing using a control message transmitted on the optical supervisory channel.

In some embodiments of any of the above apparatus, the at least one memory and the program code are configured to, with the at least one processor, cause the apparatus to establish the shared measurement schedule using control messages (e.g., **410-426,** FIG. 4; **510-520,** FIG. 5) exchanged by the first and second optical-network nodes.

In some embodiments of any of the above apparatus, the at least one memory and the program code are configured to, with the at least one processor, cause at least one of the control messages (e.g., **410, 412,** FIG. 4) to specify a reference time for the shared measurement schedule.

In some embodiments of any of the above apparatus, the at least one memory and the program code are configured to, with the at least one processor, cause at least one of the control messages (e.g., **410, 412,** FIG. 4) to specify a measurement period for the shared measurement schedule.

In some embodiments of any of the above apparatus, the at least one memory and the program code are configured to, with the at least one processor, cause at least one of the control messages (e.g., **410, 412,** FIG. 4) to specify one or more sensor-selection criteria for the first or second measurements.

In some embodiments of any of the above apparatus, the at least one memory and the program code are configured to, with the at least one processor, cause: the first optical-network node to provide (e.g., at **514,** FIG. 5) a first measurement schedule previously established for a selected sensor thereof; the second optical-network node to provide (e.g., at **516,** FIG. 5) a second measurement schedule previously established for a selected sensor thereof; and the shared measurement schedule to be established using a non-empty intersection of the first and second measurement schedules.

In some embodiments of any of the above apparatus, the first and second optical-network nodes are optically connected via an optical fiber (e.g., **340,** FIG. 3).

In some embodiments of any of the above apparatus, each of the first and second optical-network nodes comprises a respective Reconfigurable Optical Add/Drop Multiplexer (e.g., including **302,** FIG. 3).

In some embodiments of any of the above apparatus, the at least one memory and the program code are configured to, with the at least one processor, cause: a first measurement sensor to be selected, for the first measurements, from a plurality of measurement sensors (e.g., $260_1$-$260_K$, FIG. 2) of the first optical-network node; and a second measurement sensor to be selected, for the second measurements, from a plurality of measurement sensors (e.g., $260_1$-$260_K$, FIG. 2) of the second optical-network node.

In some embodiments of any of the above apparatus, at least the first measurement sensor is a logical sensor configured to run on a processor (e.g., **254,** FIG. 2) or transponder of the first optical-network node.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the scope of the disclosure, e.g., as expressed in the following claims.

Some embodiments can be embodied in the form of methods and apparatuses for practicing those methods. Some embodiments can also be embodied in the form of program code recorded in tangible media, such as magnetic recording media, optical recording media, solid-state memory, floppy diskettes, CD-ROMs, hard drives, or any other non-transitory machine-readable storage medium, wherein, when the program code is loaded into and executed by a machine, such as a computer, the machine becomes an apparatus for practicing the patented invention(s). Some embodiments can also be embodied in the form of program code, for example, stored in a non-transitory machine-readable storage medium including being loaded into and/or executed by a machine, wherein, when the program code is loaded into and executed by a machine, such as a computer or a processor, the machine becomes an apparatus for practicing the patented invention(s). When implemented on a general-purpose processor, the program code segments combine with the processor to provide a unique device that operates analogously to specific logic circuits.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

The described embodiments are to be considered in all respects as only illustrative and not restrictive. In particular, the scope of the disclosure is indicated by the appended claims rather than by the description and figures herein.

The description and drawings merely illustrate the principles of the disclosure. It will thus be appreciated that those of ordinary skill in the art will be able to devise various arrangements that, although not explicitly described or shown herein, embody the principles of the disclosure Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"SUMMARY OF SOME SPECIFIC EMBODIMENTS" in this specification is intended to introduce some example embodiments, with additional embodiments being described in "DETAILED DESCRIPTION" and/or in reference to one or more drawings. "SUMMARY OF SOME SPECIFIC EMBODIMENTS" is not intended to identify essential elements or features of the claimed subject matter, nor is it intended to limit the scope of the claimed subject matter as defined in the appended claims.

**Claims**

1.  An apparatus, comprising:

    a first optical-network node ($110_i$);
    a second optical-network node ($110_j$); and
    an optical fiber link (340) connected, at least, to support transmission of an optical data stream between the first and second optical-network nodes, the first optical-network node including a first sensor ($260_1$) to make first measurements of a portion of said optical data stream at the first optical-network node, the second optical-network node including a second sensor (260) to make second measurements of the portion of said optical data stream at the second optical-network node; and
    wherein the apparatus is further **characterized in that**
    the first and second optical-network nodes are configured to perform a negotiation of monitoring (402, 502) to set one or more common measurement times for the first and second measurements.

2.  The apparatus of claim 1, wherein the second optical-network node is configured to transmit, to the first optical-network node, information indicative of the second measurements performed thereat at said one or more common measurement times.

**3.** The apparatus of claim 2,

wherein, in response to the negotiation of monitoring, the second optical-network node is configured to include in the information (432, 532) a respective one of the common measurement times for each one of the second measurements performed at said one or more common measurement times; and

wherein the second optical-network node is configured to generate the information using specified processing (531) applied to an output of the second sensor, said processing being specified during the negotiation of monitoring.

**4.** The apparatus of claim 1,

wherein the first optical-network node has a first measurement schedule for the first sensor;

wherein the second optical-network node has a second measurement schedule for the second sensor; and

wherein the first and second optical-network nodes are configured to set the one or more common measurement times using a non-empty intersection of the first and second measurement schedules.

**5.** The apparatus of claim 1, wherein the second optical-network node is configured to select the second sensor from a plurality of sensors ($260_1$-$260_K$) of the second network node based on one or more sensor-selection criteria communicated by the first optical-network node during the negotiation of monitoring.

**6.** The apparatus of claim 1, wherein the first sensor is a logical sensor configured to run on a processor (254) of the first optical-network node, the processor of the first optical-network node being configured to recover data encoded in the portion of said optical data stream.

**7.** The apparatus of claim 1 or 6, wherein the second sensor is a logical sensor configured to run on a processor (254) of the second optical-network node.

**8.** The apparatus of claim 1, wherein the negotiation of monitoring comprises transmission of a plurality of control messages (410-426) between the first and second optical-network nodes.

**9.** The apparatus of claim 8, wherein at least one of the control messages (410, 412) is to specify a reference time for said one or more common measurement times.

**10.** The apparatus of claim 8 or 9, wherein at least one of the control messages (410, 412) is to specify a period for the common measurement times.

**11.** The apparatus of any one of claims 8, 9, and 10, wherein at least one of the control messages (410, 412) is to specify one or more sensor-selection criteria for the first or second measurements.

**12.** An apparatus, comprising:

a first optical-network node ($110_i$) including an electronic controller (220) and a node equipment (250), the node equipment being configured to communicate an optical data stream with a second optical-network node ($110_j$) via an optical fiber link (140, 340);

wherein the electronic controller is configured to establish a shared measurement schedule for first measurements of a portion of the optical data stream at the node equipment and for second measurements of the portion of the optical data stream at the second optical-network node; and

wherein the apparatus is further **characterized in that**

the apparatus is configured to establish the shared measurement schedule using control messages exchanged between the first ($110_i$) and second optical-network nodes ($110_j$).

**13.** The apparatus of claim 12, wherein the first optical network node is configured to receive information indicative of the second measurements from the second optical-network node.

**14.** The apparatus of claim 12, wherein the shared measurement schedule is configured to cause at least one of the first measurements and at least one of the second measurements to be substantially synchronous.

**15.** A non-transitory machine-readable medium, having encoded thereon program code, wherein, when the program code is executed by an apparatus according to any of claims 1-14, the apparatus implements a method **characterized in that** the method comprises:

establishing a shared measurement schedule for performing first measurements at a first optical-network node ($110_i$) of an optical communication network and performing second measurements at a different second optical-network node ($110_j$) of the optical communication network, the shared measurement schedule being established using control messages exchanged between the first ($110_i$) and second optical-network nodes ($110_j$); and

causing digital samples of both the first measurements and the second measurements to be congregated.

**Patentansprüche**

1. Vorrichtung, umfassend:

einen ersten optischen Netzknoten (110$_i$);
einen zweiten optischen Netzknoten (110j); und
eine optische Faserverbindung (340), die zumindest zum Unterstützen der Sendung eines optischen Datenstroms zwischen dem ersten und dem zweiten optischen Netzknoten verbunden ist, wobei der erste optische Netzknoten einen ersten Sensor (260$_1$) zum Durchführen erster Messungen eines Abschnitts des optischen Datenstroms an dem ersten optischen Netzknoten umfasst, wobei der zweite optische Netzknoten einen zweiten Sensor (260) zum Durchführen zweiter Messungen des Abschnitts des optischen Datenstroms an dem zweiten optischen Netzknoten umfasst; und
wobei die Vorrichtung ferner **dadurch gekennzeichnet ist, dass**
der erste und der zweite optische Netzknoten dazu ausgestaltet sind, eine Aushandlung von Überwachung (402, 502) durchzuführen, um eine oder mehrere gemeinsame Messzeitpunkte für die ersten und die zweiten Messungen einzustellen.

2. Vorrichtung nach Anspruch 1, wobei der zweite optische Netzknoten dazu ausgestaltet ist, an den ersten optischen Netzknoten Informationen zu senden, welche die zweiten Messungen angeben, die daselbst an dem einen oder den mehreren gemeinsamen Messzeitpunkten durchgeführt werden.

3. Vorrichtung nach Anspruch 2,

wobei der zweite optische Netzknoten dazu ausgestaltet ist, als Reaktion auf die Aushandlung von Überwachung in die Informationen (432, 532) einen entsprechenden von den gemeinsamen Messzeitpunkten für jede der zweiten Messungen aufzunehmen, die an dem einen oder den mehreren gemeinsamen Messzeitpunkten durchgeführt werden; und
wobei der zweite optische Netzknoten dazu ausgestaltet ist, die Informationen unter Verwendung angegebener Verarbeitung (531) zu erzeugen, die auf eine Ausgabe des zweiten Sensors angewandt wird, wobei die Verarbeitung während der Aushandlung von Überwachung angegeben wird.

4. Vorrichtung nach Anspruch **1,**

wobei der erste optische Netzknoten einen ersten Messplan für den ersten Sensor aufweist;
wobei der zweite optische Netzknoten einen zweiten Messplan für den zweiten Sensor aufweist; und
wobei der erste und der zweite optische Netzknoten dazu ausgestaltet sind, den einen oder die mehreren gemeinsamen Messzeitpunkte unter Verwendung einer nicht-leeren Schnittmenge des ersten und des zweiten Messplans einzustellen.

5. Vorrichtung nach Anspruch 1, wobei der zweite optische Netzknoten dazu ausgestaltet ist, den zweiten Sensor von einer Vielzahl von Sensoren (260$_1$ bis 260$_K$) des zweiten Netzknotens basierend auf einem oder mehreren Sensorauswahlkriterien auszuwählen, die von dem ersten optischen Netzknoten während der Aushandlung von Überwachung kommuniziert werden.

6. Vorrichtung nach Anspruch 1, wobei der erste Sensor ein logischer Sensor ist, der dazu ausgestaltet ist, auf einem Prozessor (254) des ersten optischen Netzknotens zu laufen, wobei der Prozessor des ersten optischen Netzknotens dazu ausgestaltet ist, Daten wiederherzustellen, die in dem Abschnitt des optischen Datenstroms codiert sind.

7. Vorrichtung nach Anspruch 1 oder 6, wobei der zweite Sensor ein logischer Sensor ist, der dazu ausgestaltet ist, auf einem Prozessor (254) des zweiten optischen Netzknotens zu laufen.

8. Vorrichtung nach Anspruch 1, wobei die Aushandlung von Überwachung die Sendung einer Vielzahl von Steuernachrichten (410 bis 426) zwischen dem ersten und dem zweiten optischen Netzknoten umfasst.

9. Vorrichtung nach Anspruch 8, wobei mindestens eine der Steuernachrichten (410, 412) zum Angeben eines Bezugszeitpunkts für den einen oder die mehreren gemeinsamen Messzeitpunkte bestimmt ist.

10. Vorrichtung nach Anspruch 8 oder 9, wobei mindestens eine der Steuernachrichten (410, 412) zum Angeben eines Zeitraums für die gemeinsamen Messzeitpunkte bestimmt ist.

11. Vorrichtung nach einem der Ansprüche 8, 9 und 10, wobei mindestens eine der Steuernachrichten (410, 412) zum Angeben eines oder mehrerer Sensorauswahlkriterien für die ersten oder die zweiten Messungen bestimmt ist.

12. Vorrichtung, umfassend:

einen ersten optischen Netzknoten (110$_i$), der eine elektronische Steuereinrichtung (220) und eine Knotenausrüstung (250) umfasst, wobei die Knotenausrüstung dazu ausgestaltet ist, einen optischen Datenstrom mit einem zweiten optischen Netzknoten (110$_j$) über eine optische Faserverbindung (140; 340) zu kommunizieren; wobei die elektronische Steuereinrichtung dazu ausgestaltet ist, einen gemeinsamen Messplan für erste Messungen eines Abschnitts des optischen Datenstroms an der Knotenausrüstung und für zweite Messungen des Abschnitts des optischen Datenstroms an dem zweiten optischen Netzknoten aufzustellen; und wobei die Vorrichtung ferner **dadurch gekennzeichnet ist, dass** die Vorrichtung dazu ausgestaltet ist, den gemeinsamen Messplan unter Verwendung von Steuernachrichten aufzustellen, die zwischen dem ersten (110$_i$) und dem zweiten optischen Netzknoten (110$_j$) ausgetauscht werden.

13. Vorrichtung nach Anspruch 12, wobei der erste optische Netzknoten dazu ausgestaltet ist, Informationen, welche die zweiten Messungen angeben, von dem zweiten optischen Netzknoten zu empfangen.

14. Vorrichtung nach Anspruch 12, wobei der gemeinsame Messplan dazu ausgestaltet ist, zu veranlassen, dass mindestens eine von den ersten Messungen und mindestens eine von den zweiten Messungen im Wesentlichen synchron sind.

15. Nichtflüchtiger maschinenlesbarer Datenträger, der darauf codierten Programmcode aufweist, wobei, wenn der Programmcode von einer Vorrichtung nach einem der Ansprüche 1 bis 14 ausgeführt wird, die Vorrichtung ein Verfahren implementiert, dass **dadurch gekennzeichnet ist, dass** das Verfahren Folgendes umfasst:

Aufstellen eines gemeinsamen Messplans zum Durchführen erster Messungen an einem ersten optischen Netzknoten (110$_i$) eines optischen Kommunikationsnetzes und Durchführen zweiter Messungen an einem unterschiedlichen zweiten optischen Netzknoten (110$_j$) des optischen Kommunikationsnetzes, wobei der gemeinsame Messplan unter Verwendung von Steuernachrichten aufgestellt wird, die zwischen dem ersten (110$_i$) und dem zweiten optischen Netzknoten (110$_j$) ausgetauscht werden; und Bewirken, dass digitale Messwerte von sowohl den ersten Messungen als auch den zweiten Messungen zusammengeführt werden.

**Revendications**

1. Appareil, comprenant :

un premier nœud de réseau optique (110$_i$) ; un deuxième nœud de réseau optique (110$_j$) ; et une liaison à fibre optique (340) reliée, au moins, afin de permettre la transmission d'un flux de données optique entre le premier et le deuxième nœuds de réseau optique, le premier nœud de réseau optique comprenant un premier capteur (260$_1$) destiné à effectuer des premières mesures d'une partie dudit flux de données optique au niveau du premier nœud de réseau optique, le deuxième nœud de réseau optique comprenant un deuxième capteur (260) destiné à effectuer des deuxièmes mesures de la partie dudit flux de données optique au niveau du deuxième nœud de réseau optique ; et dans lequel l'appareil est en outre **caractérisé en ce que** le premier et le deuxième nœuds de réseau optique sont configurés pour effectuer une négociation de surveillance (402, 502) afin de définir un ou plusieurs moment(s) de mesure commun(s) pour les premières et deuxièmes mesures.

2. Appareil selon la revendication 1, dans lequel le deuxième nœud de réseau optique est configuré pour transmettre, au premier nœud de réseau optique, des informations qui indiquent les deuxièmes mesures effectuées au niveau de celui-ci audit ou auxdits moment(s) de mesure commun(s).

3. Appareil selon la revendication 2,

dans lequel, en réponse à la négociation de surveillance, le deuxième nœud de réseau optique est configuré pour inclure aux informations (432, 532) l'un des moments de mesure respectifs communs pour chacune des deuxièmes mesures effectuées audit ou auxdits moment(s) de mesure commun(s) ; et dans lequel le deuxième nœud de réseau optique est configuré pour générer les informations à l'aide d'un traitement spécifié (531) appliqué à une sortie du deuxième capteur, ledit traitement étant spécifié pendant la négociation de surveillance.

4. Appareil selon la revendication 1,

dans lequel le premier nœud de réseau optique possède un premier plan de mesures pour le premier capteur ; dans lequel le deuxième nœud de réseau optique possède un deuxième plan de mesures pour le deuxième capteur ; et

dans lequel le premier et le deuxième nœuds de réseau optique sont configurés pour définir le ou les moment(s) de mesure commun(s) en utilisant une intersection non vide du premier et du deuxième plans de mesures.

5. Appareil selon la revendication 1, dans lequel le deuxième nœud de réseau optique est configuré pour sélectionner le deuxième capteur parmi une pluralité de capteurs ($260_1$-$260_K$) du deuxième nœud de réseau optique sur la base d'un ou plusieurs critère(s) de sélection de capteur communiqué(s) par le premier nœud de réseau optique pendant la négociation de surveillance.

6. Appareil selon la revendication 1, dans lequel le premier capteur est un capteur logique configuré pour fonctionner sur un processeur (254) du premier nœud de réseau optique, le processeur du premier nœud de réseau optique étant configuré pour récupérer les données encodées dans la partie dudit flux de données optique.

7. Appareil selon la revendication 1 ou 6, dans lequel le deuxième capteur est un capteur logique configuré pour fonctionner sur un processeur (254) du deuxième nœud de réseau optique.

8. Appareil selon la revendication 1, dans lequel la négociation de surveillance comprend la transmission d'une pluralité de messages de contrôle (410-426) entre le premier et le deuxième nœuds de réseau optique.

9. Appareil selon la revendication 8, dans lequel au moins l'un des messages de contrôle (410, 412) est destiné à spécifier un moment de référence pour ledit ou lesdits moment(s) de mesure commun(s).

10. Appareil selon la revendication 8 ou 9, dans lequel au moins l'un des messages de contrôle (410, 412) est destiné à spécifier une période pour les moments de mesure communs.

11. Appareil selon l'une quelconque des revendications 8, 9 et 10, dans lequel au moins l'un des messages de contrôle (410, 412) est destiné à spécifier un ou plusieurs critère(s) de sélection de capteur pour les premières ou les deuxièmes mesures.

12. Appareil, comprenant :

un premier nœud de réseau optique ($110_i$) comprenant un contrôleur électronique (220) et un équipement de nœud (250), l'équipement de nœud étant configuré pour communiquer un flux de données optique avec un deuxième nœud de réseau optique ($110_j$) via une liaison à fibre optique (140, 340) ;

dans lequel le contrôleur électronique est configuré pour établir un plan de mesures partagé pour les premières mesures d'une partie du flux de données optique au niveau de l'équipement de nœud et pour les deuxièmes mesures de la partie du flux de données optique au niveau du deuxième nœud de réseau optique ; et

dans lequel l'appareil est en outre **caractérisé en ce que**

l'appareil est configuré pour établir le plan de mesures partagé à l'aide de messages de contrôle échangés entre le premier ($110_i$) et le deuxième ($110_j$) nœuds de réseau optique.

13. Appareil selon la revendication 12, dans lequel le premier nœud de réseau optique est configuré pour recevoir des informations qui indiquent les deuxièmes mesures de la part du deuxième nœud de réseau optique.

14. Appareil selon la revendication 12, dans lequel le plan de mesures partagé est configuré pour faire en sorte qu'au moins l'une des premières mesures et au moins l'une des deuxièmes mesures soient sensiblement synchrones.

15. Support non transitoire lisible par une machine, qui contient un code de programme encodé sur celui-ci, dans lequel, lorsque le code de programme est exécuté par un appareil selon l'une quelconque des revendications 1 à 14, l'appareil met en œuvre un procédé **caractérisé en ce que** le procédé comprend :

l'établissement d'un plan de mesures partagé afin d'effectuer des premières mesures au niveau d'un premier nœud de réseau optique ($110_i$) d'un réseau de communication optique et d'effectuer des deuxièmes mesures au niveau d'un deuxième nœud de réseau optique différent ($110_j$) du réseau de communication optique, le plan de mesures partagé étant établi à l'aide de messages de contrôle échangés entre le premier ($110_i$) et le deuxième ($110_j$) nœuds de réseau optique ; et

le fait que des échantillons numériques des premières mesures et des deuxièmes mesures soient regroupés.

## FIG. 1

<u>100</u>

## FIG. 2

$110_i$

$210_i$

$120_i$

I/O INTERFACE

$140_i$

$220_i$

**NODE CONTROLLER**

$224$
PROCESSOR

$226$
MEMORY

CONSUMER 1
$230_1$
$230_M$
CONSUMER M

COLLECTOR 1
$240_1$
$240_L$
COLLECTOR L

$250_i$

**NODE EQUIPMENT**

$254$
PROCESSOR

$256$
MEMORY

SENSOR 1 — $260_1$

SENSOR K — $260_K$

FIG. 3

## FIG. 4

400

| 230$_1$ | | 240$_2$ | 240$_1$ |
|---|---|---|---|
| CONSUMER | | COLLECTOR | COLLECTOR |

NEGOTIATION 402

410 — PROPOSE (sensor$_2$, [<id$_0$, ref_time$_0$, interval$_0$>])

412 — PROPOSE (sensor$_1$, [<id$_0$, ref_time$_0$, interval$_0$>])

414 — ACCEPT ([id$_0$])

416 — REJECT ([id$_0$])

418 — PROPOSE (sensor$_2$, [<id$_1$, ref_time$_1$, interval$_1$>, <id$_2$, ref_time$_2$, interval$_2$>])

420 — PROPOSE (sensor$_1$, [<id$_1$, ref_time$_1$, interval$_1$>])

422 — ACCEPT ([id$_1$])

424 — ACCEPT ([id$_1$])

426 — REJECT ([id$_0$])

ACTIVATION 404

428 — ACTIVATE ([id$_1$])

430 — ACTIVATE ([id$_1$])

SAMPLING 406

432 — SAMPLE(id$_1$, T$_k$ telemetry_data_for_sensor$_{2,k}$)

434 — SAMPLE(id$_1$, T$_k$ telemetry_data_for_sensor$_{1,k}$)

DEACTIVATION 408

436 — DEACTIVATE ([id$_1$])

438 — DEACTIVATE ([id$_1$])

EP 4 117 200 B1

## FIG. 5

500

CONSUMER $230_1$   COLLECTOR $240_2$   COLLECTOR $240_1$

510 — RETRIEVE (sensor$_2$)

512 — RETRIEVE (sensor$_1$)

NEGOTIATION 502

514 — PROPOSE (sensor$_2$, [<id$_0$, ref_time$_0$, interval$_0$>, <id$_1$, ref_time$_1$, interval$_1$>])

516 — PROPOSE (sensor$_1$, [<id$_2$, ref_time$_2$, interval$_2$>, <id$_3$, ref_time$_3$, interval$_3$>])

518 — ACCEPT ([id$_3$])

520 — ACCEPT ([id$_1$])

ACTIVATION 504

528 — ACTIVATE ([id$_3$])

530 — ACTIVATE ([id$_1$])

PRE-PROCESSING 531

SAMPLING 506

532 — SAMPLE(id$_3$, T$_k$ telemetry_data_for_sensor$_{2,k}$)

534 — SAMPLE(id$_1$, T$_k$ telemetry_data_for_sensor$_{1,k}$)

DEACTIVATION 508

536 — DEACTIVATE ([id$_3$])

538 — DEACTIVATE ([id$_1$])

EP 4 117 200 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3291493 A1
- US 2019281373 A1

- US 10281659 B